# EUROPÄISCHE PATENTANMELDUNG

(11) **EP 4 431 675 A1**
(43) Veröffentlichungstag der Anmeldung: **18.09.2024**
(21) Anmeldenummer: 23200584.3
(22) Anmeldetag: 28.09.2023
(51) Int. Cl.: E04F 13/08, E04F 13/18, B32B 5/02, B32B 27/12, B32B 27/36

(54) **WAND- ODER DECKENPANEEL**

(30) Priorität: 20.04.2023 DE 202023102061 U; 13.03.2023 DE 202023101210 U
(71) Anmelder: KKVV GmbH, 46242 Bottrop (DE)
(72) Erfinder: Koczwara, Andreas, 46242 Bottrop (DE)
(74) Vertreter: Kluin Patent

(57) **Zusammenfassung**

Es wird ein Wand- oder Deckenpaneel (1) aufweisend eine Rückwand (2) aus Kunststoff und eine Dekorschicht (3) vorgeschlagen, wobei die Dekorschicht (3) direkt auf der Rückwand (2) angeordnet ist.

## Beschreibung

Die Erfindung betrifft ein Wand- oder Deckenpaneel mit einer Rückwand und einer Dekorschicht.

Wand- bzw. Deckenpaneele finden immer mehr Verwendung bei der Gestaltung von Innenräumen. Hierbei dienen sie vornehmlich dekorativen Zwecken, können aber auch bestimmte Funktionen im Raum erfüllen. Typischerweise sind Wand-bzw. Deckenpaneele mehrstückig aufgebaut und weisen eine Rückwand auf, mit der das Wand- bzw. Deckenpaneel befestigt wird. Dem Raum zugewandt ist eine Dekorschicht angeordnet, welche einen dekorativen Zweck erfüllt oder sogar für eine bestimmte Funktion, wie beispielsweise Schallabsorption, vorgesehen ist.

Aus dem Stand der Technik sind Wand- bzw. Deckenpaneele bekannt, bei denen die Dekorschicht auf eine Holzfaserplatte aufgebracht ist. Die Holzfaserplatte bildet entweder die Rückwand oder ist ihrerseits wiederum auf einer Rückwand aufgebracht.

Kritisch bei Wand- und Deckenpaneelen ist stets das Gewicht. Dies macht sich zum einen in der Handhabung bei der Installation des Wand- bzw. Deckenpaneels, aber auch beim Transport und der Verkaufspräsentation bemerkbar.

Ausgehend vom Stand der Technik ist es daher eine Aufgabe der vorliegenden Erfindung, ein Wand- oder Deckenpaneel zur Verfügung zu stellen, welches deutlich leichter ist als ein Wand- bzw. Deckenpaneel aus dem Stand der Technik und welches zudem günstig und leicht herzustellen ist.

Diese Aufgabe wird gelöst durch ein Wand- oder Deckenpaneel gemäß Anspruch 1.

Das erfindungsgemäße Wand- bzw. Deckenpaneel weist eine Rückwand aus einem Kunststoff auf. Erfindungsgemäß ist vorgesehen, dass die Dekorschicht direkt auf dieser Rückwand angeordnet ist. Mit anderen Worten wird bei dem erfindungsgemäßen Wand- bzw. Deckenpaneel auf eine Lage aus Holzfasern, beispielsweise eine MDF-Lage, verzichtet. Hieraus ergibt sich ein deutlicher Gewichtsvorteil im Vergleich zu den aus dem Stand der Technik bekannten Wand-bzw. Deckenpaneelen. Insbesondere liegt der Erfindung zugrunde, dass der Aufbau des Wand- bzw. Deckenpaneels deutlich vereinfacht und die herkömmliche und tradierte Art des Aufbaus mit MDF als Trägermaterial verworfen wird.

Die Dekorschicht im Sinne der vorliegenden Erfindung ist eine optisch-funktionale Schicht. So kann die Dekorschicht neben optischen Effekten, wie beispielsweise Minimierung von Lichtreflexionen, auch funktionale Effekte, wie Schallabsorption oder Haftfunktionen, umfassen. Denkbar ist, dass die Dekorschicht eine matte Oberfläche zur Verminderung von Lichtreflexionen, beispielsweise in Form einer Tafel, und einen magnetisch wirksamen Teil aufweist, welcher als Schicht zwischen der Oberfläche und der Rückwand realisiert ist. Mit anderen Worten kann die Dekorschicht im Sinne der vorliegenden Erfindung mehrlagig oder einlagig sein. Denkbar ist auch, dass die Dekorschicht nicht schichtförmig ist, sondern Einzelelemente, wie dekoratives Material, beispielsweise einzelne (Kunst-) Blätter, umfasst, welche mit einer Haltestruktur auf der Rückwand angebracht sind. Auch eine solche Dekorschicht ist direkt auf der Rückwand angeordnet, wenn keine Lage, insbesondere keine Lage aus Holzfasern, zwischen der optischfunktionalen Dekorschicht und der Rückwand angeordnet ist.

Insbesondere ist vorgesehen, dass die Rückwand keine Holzfasern aufweist. Holzfasern würden der Rückwand ein höheres Gewicht verleihen, was gemäß dieser bevorzugten Ausführungsform auf vorteilhafte Weise vermieden wird. Insbesondere weist die Rückwand keine Holzfaserplatte auf.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass die Rückwand Kunststofffasern aufweist und vorzugsweise aus Kunststofffasern besteht. Kunststofffasern geben der Rückwand eine noch größere Leichtigkeit als dies bei einer massiven Rückwand der Fall wäre. Die Kunststofffasern können beispielsweise Spunbond-Fasern oder Meltblown-Fasern sein. Denkbar ist etwa, dass die Kunststofffasern durch Schmelzspinnen, Elektrospinnen, Nassspinnen oder Matrixspinnen hergestellt sind. Hierzu wird ein Ausgangsmaterial, beispielsweise als Kunststoffflocken oder Kunststoffgranulat, bereitgestellt, getrocknet und anschließend durch Spinndüsen extrudiert. Die extrudierten Fasern können dann gezogen, geformt, geschnitten und/oder gepresst werden. Denkbar ist, dass die Kunststofffasern als Non-Woven-Material zur Rückwand zusammengefügt werden. Vorzugsweise ist vorgesehen, dass die Rückwand eine filzartige Struktur besitzt. Eine filzartige Struktur weist Fasern auf, welche aneinanderhaften. Denkbar ist beispielsweise, dass die Fasern der filzartigen Struktur wasserstrahlverfestigt oder teilweise miteinander verschmolzen sind. Denkbar ist auch, dass die Rückwand eine vliesartige Struktur besitzt. Fasern einer vliesartigen Struktur sind, beispielsweise durch Vernadeln, insbesondere durch Wasserstrahlvernadeln, miteinander verschlungen, so dass die Fasern fest zusammenhalten. Insbesondere ist denkbar, dass die Rückwand eine filz- und vliesartige Struktur besitzt. Ferner ist denkbar, dass die Rückwand eine moosartige Struktur aufweist. Durch diese Struktur ist eine besonders effektive Dämmung von Schall möglich.

Vorzugsweise ist vorgesehen, dass die Rückwand einstückig ist. Eine einstückige Rückwand erhöht auf vorteilhafte Weise die Stabilität des Wand- bzw. Deckenpaneels und erleichtert eine hochgenaue Herstellung. Einstückig im Sinne der Erfindung bedeutet, dass die Rückwand einteilig aus einem Stück gefertigt ist. Denkbar ist, dass die Rückwand gegossen, insbesondere in Form gegossen, beispielsweise spritzgegossen ist. Denkbar ist aber auch, dass die Rückwand materialabtragend in Form gebracht, beispielsweise geschnitten und/oder gefräst ist. Denkbar ist aber auch, dass die Rückwand in Form gepresst ist. Einstückig im Sinne der vorliegenden Erfindung bedeutet auch, dass die Rückwand aus einer Vielzahl von Kunststofffasern hergestellt sein kann. Das Merkmal "einstückig" im Sinne der vorliegenden Erfindung bedeutet vielmehr, dass die Rückwand nicht aus einzelnen Lagen, insbesondere aus einzelnen Lagen unterschiedlichen Materials, aufgebaut ist.

Gemäß einer weiteren bevorzugten Ausführungsform der vorliegenden Erfindung ist vorgesehen, dass der Kunststoff ein recycelter Kunststoff ist, was das Wand-bzw. Deckenpaneel deutlich nachhaltiger macht. So ist beispielsweise denkbar, dass die Rückwand zumindest teilweise aus wiederverwerteten Plastikflaschen hergestellt ist.

Vorzugsweise ist vorgesehen, dass der Kunststoff PET ist. PET ist ein Material, welches insbesondere auf dem Gebiet der Möbelherstellung und auf dem Gebiet der Flächengestaltung von Innenräumen bisher so gut wie keine Beachtung findet, sowohl für die Verwendung mit Möbeln als auch für die Verwendung als Unterlage für Parkett oder Laminat, da PET allgemein als zu wenig mechanisch belastbar gilt. Insofern überwindet die Verwendung von PET in diesem Fall ein althergebrachtes technisches Vorurteil und ermöglicht eine kostengünstige, gewichtsreduzierte und hochverfügbare Basis für die Rückwand eines Wand- bzw. Deckenpa neels.

Zur Befestigung der Dekorschicht auf der Rückwand ist insbesondere vorgesehen, dass die Dekorschicht mit der Rückwand teilflächig oder ganzflächig verklebt ist. Hierdurch ist eine wirksame Verbindung zwischen Dekorschicht und Rückwand gewährleistet, ohne dass die Dekorschicht oder die Rückwand mechanisch bearbeitet werden müssten. Denkbar ist aber auch, dass die Dekorschicht auf die Rückwand getackert, geklipst, mit Spreizdübeln befestigt, genagelt, geschraubt oder geklammert ist.

Gemäß einer weiteren bevorzugten Ausführungsform der vorliegenden Erfindung ist vorgesehen, dass die Dekorschicht Holz aufweist und vorzugsweise ein Furnier ist. Alternativ hierzu ist vorzugsweise vorgesehen, dass die Dekorschicht Stein aufweist und insbesondere ein Steinfurnier ist. Hierdurch ergibt sich die Möglichkeit, optisch ansprechende Wand- bzw. Deckenvertäfelungen bereitzustellen. Denkbar ist aber auch, dass die Dekorschicht eine Kunststoffschicht aufweist oder ist. Insbesondere ist denkbar, dass auf die Dekorschicht ein Dekor aufgedruckt ist.

Alternativ oder zusätzlich ist möglich, dass die Dekorschicht ein Metall umfasst und vorzugsweise eine Metallschicht ist. Hierdurch ist es auf vorteilhafte Weise möglich, das Wand- oder Deckenpaneel magnetisch zu nutzen, beispielsweise um Notizen mittels eines Magneten an dem Wand- bzw. Deckenpaneel zu befestigen. Denkbar ist beispielsweise, dass die Dekorschicht eine Metallschicht umfasst, auf welcher eine Holz-, Laminat- oder Kunststoffschicht angeordnet ist. So kann beispielsweise ein Wand- bzw. Deckenpaneel mit einer Holzoptik ebenfalls magnetisch genutzt werden.

Alternativ oder zusätzlich ist vorgesehen, dass die Dekorschicht eine moosartige Struktur umfasst. Vorzugsweise ist vorgesehen, dass die moosartige Struktur ein Moos und/oder ein Kunstmoos ist. Hierdurch ist es möglich, das Raumklima und den Raumschall positiv zu beeinflussen.

Alternativ oder zusätzlich ist vorgesehen, dass die Dekorschicht ein Laminat umfasst. Das Laminat kann beispielsweise in Holzoptik oder in Steinoptik gehalten sein. Ein Laminat ist günstig, pflegeleicht und optisch gefällig. Denkbar ist auch, dass die Dekorschicht eine Korkschicht umfasst oder eine Korkschicht ist.

Alternativ oder zusätzlich ist vorgesehen, dass die Dekorschicht eine Schieferschicht und/oder eine Schicht zur Verwendung als Tafel aufweist. Denkbar ist auch, dass die Dekorschicht eine Lederschicht, beispielsweise eine Kunst- oder Echtlederschicht, aufweist. Vorstellbar ist ferner, dass die Dekorschicht eine Glasschicht und/oder eine Spiegelschicht aufweist.

Insbesondere ist vorgesehen, dass die Rückwand zumindest teilweise zwischen 4mm und 15mm und vorzugsweise 9mm dick ist und die Dekorschicht zwischen 0,5mm und 100mm dick ist. Weist die Dekorschicht eine moosartige Struktur auf, so ist insbesondere vorgesehen, dass die Dekorschicht im Mittel 10mm oder dicker, beispielsweise 50mm dick ist. Weist die Dekorschicht keine moosartige Struktur auf, so ist insbesondere vorgesehen, dass die Dekorschicht 1mm bis 5mm dick ist.

Um dem Wand- bzw. Deckenpaneel eine gefällige und einer Schallabsorption zuträgliche Formgebung zu verleihen ist vorzugsweise vorgesehen, dass in die Rückwand parallele Nuten eingearbeitet sind. Die Dekorschicht ist hierbei lediglich zwischen den Nuten auf der Rückwand angeordnet. Vorzugsweise ist vorgesehen, dass die Nuten einen rechteckigen Querschnitt aufweisen. Denkbar ist aber auch, dass die Nuten einen halbkreisförmigen, halb-elliptischen oder V-förmigen Querschnitt aufweisen. Insbesondere ist vorgesehen, dass die Nuten in die Rückwand eingefräst sind. Denkbar ist, dass die Nuten in die Rückwand und in die Dekorschicht eingefräst sind. Denkbar ist aber auch das zunächst die Nuten in die Rückwand eingefräst sind und die Dekorschicht auf die Bereiche zwischen den Nuten aufgetragen ist. Vorzugsweise ist vorgesehen, dass die Rückwand eingefärbt ist. Hierdurch ergibt sich ein optischer Kontrast zwischen den Nuten und der Dekorschicht. Um eine gute Schallabsorption mit einer gefälligen Optik zu kombinieren ist vorzugsweise vorgesehen, dass die Nuten zwischen 2 mm und 25mm, insbesondere zwischen 10mm und 15mm breit sind und dass die Bereiche zwischen den Nuten zwischen 50mm und 10mm, insbesondere zwischen 35mm und 25mm voneinander entfernt sind. Weiterhin ist hierzu vorzugsweise vorgesehen, dass die Rückwand im Bereich zwischen den Nuten zwischen 6mm und 20mm, vorzugsweise etwa 9mm dick ist und im Bereich der Nuten zwischen 3mm und 10mm, insbesondere 5,5mm dick ist. Die Dekorschicht ist vorzugsweise zwischen 0,5mm und 3mm und insbesondere 1mm dick.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsform der Erfindung, welche den Erfindungsgedanken nicht einschränken.

Es zeigen:
- Fig. 1:: eine schnittbildliche, schematische Ansicht eines Wand- oder Deckenpaneels gemäß einer beispielhaften Ausführungsform der vorliegenden Erfindung,
- Fig. 2:: eine schnittbildliche, schematische Ansicht eines Wand- oder Deckenpaneels gemäß einer beispielhaften Ausführungsform der vorliegenden Erfindung,
- Fig. 3:: eine schnittbildliche, schematische Ansicht eines Wand- oder Deckenpaneels gemäß einer beispielhaften Ausführungsform der vorliegenden Erfindung,
- Fig. 4:: eine schematische Ansicht eines Wand- oder Deckenpaneels gemäß einer beispielhaften Ausführungsform der vorliegenden Erfindung,
- Fig. 5:: eine schnittbildliche, schematische Ansicht eines Wand- oder Deckenpaneels gemäß einer beispielhaften Ausführungsform der vorliegenden Erfindung und
- Fig. 6:: eine schnittbildliche, schematische Ansicht eines Details eines Wand- oder Deckenpaneels gemäß einer beispielhaften Ausführungsform der vorliegenden Erfindung.

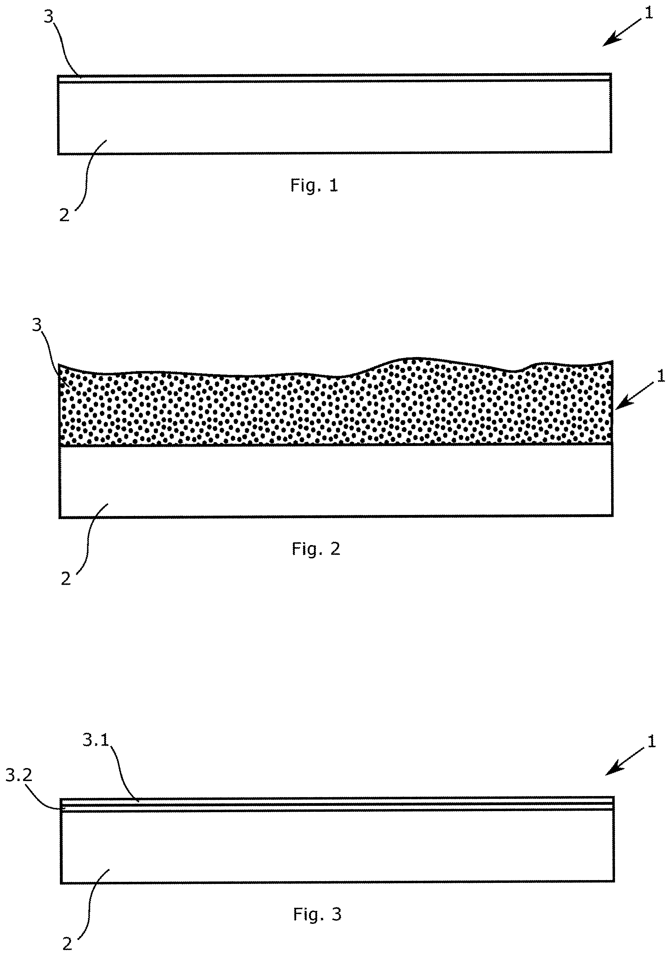

Die Figuren 1, 2, 3 und 5 zeigen jeweils eine schnittbildliche, schematische Ansicht eines Wand- oder Deckenpaneels 1 gemäß einer beispielhaften Ausführungsform der vorliegenden Erfindung. Ein Wand- bzw. Deckenpaneel 1 ist zum Anbringen an eine Wand oder eine Decke vorgesehen und erfüllt je nach Ausstattung dekorative und/oder funktionale Aufgaben. Hierzu ist auf eine Rückwand 2 des Wand- bzw. Deckenpaneels 1 eine Dekorschicht 3 aufgetragen. Die Dekorschicht 3 ist in den hier gezeigten Ausführungsformen teilflächig oder ganzflächig mit der Rückwand 2 des Wand- bzw. Deckenpaneels 1 verklebt.

Um Kosten und Gewicht zu sparen und somit das Handling des Wand- bzw. Deckenpaneels 1 zu verbessern, ist vorgesehen, dass die Dekorschicht 3 direkt auf der Rückwand 2 angeordnet ist. Anders als aus dem Stand der Technik bekannt, ist keine Holzfaserplatte, insbesondere keine MDF-Platte, zwischen der Dekorschicht 3 und der Rückwand 2 vorgesehen. Auch weist die Rückwand 2 keine Holzfasern auf. Somit ist das erfindungsgemäße Wand- bzw. Deckenpaneel 1 sehr leicht im Vergleich mit bekannten Wand- bzw. Deckenpaneelen.

Die Rückwand 2 der dargestellten Wand- bzw. Deckenpaneele 1 ist aus Kunststofffasern hergestellt, welche aus recyceltem PET gewonnen wurden. Kunststofffasern aus recyceltem PET sind kostengünstig und sehr leicht. Denkbar ist, dass Einwegflaschen zur Gewinnung des PET verwendet werden. Dies trägt deutlich zur Nachhaltigkeit des Wand- oder Deckenpaneels 1 bei.

Das in Figur 1 gezeigten Wand- bzw. Deckenpaneel 1 weist eine 9 mm dicke Rückwand 2 und eine 1 mm dicke Dekorschicht 3 auf. Die Dekorschicht 3 ist ein Furnier, beispielsweise ein Holzfurnier oder ein Steinfurnier, ein Laminat oder eine bedruckte Kunststoffschicht. Denkbar ist auch, dass die Dekorschicht 3 eine Metallschicht ist. Hierdurch kann das Wand- bzw. Deckenpaneel 1 auch magnetisch, beispielsweise als magnetische Pinnwand verwendet werden. Die Dekorschicht 2 kann aber auch eine Schieferschicht oder eine Schicht zur Verwendung als Tafel umfassen. In Figur 2 ist eine weitere Ausführungsform des Wand- bzw. Deckenpaneels 1 dargestellt, bei welcher die Dekorschicht 3 eine moosartige Struktur aufweist. Diese moosartige Struktur kann Moos oder Kunstmoos aufweisen und ist deutlich dicker als die in Fig. 1 gezeigte Dekorschicht 3. Figur 3 zeigt eine zweiteilige Dekorschicht 3, bei der unter einer Optik-Schicht 3.1, welche beispielsweise ein Furnier oder ein Laminat aufweisen kann, eine Funktionsschicht 3.2 angeordnet ist. Die Funktionsschicht 3.2 kann eine Metallschicht sein. Hierdurch ist das Wand-bzw. Deckenpaneel 1 trotz nicht-metallischer Oberfläche magnetisch funktional.

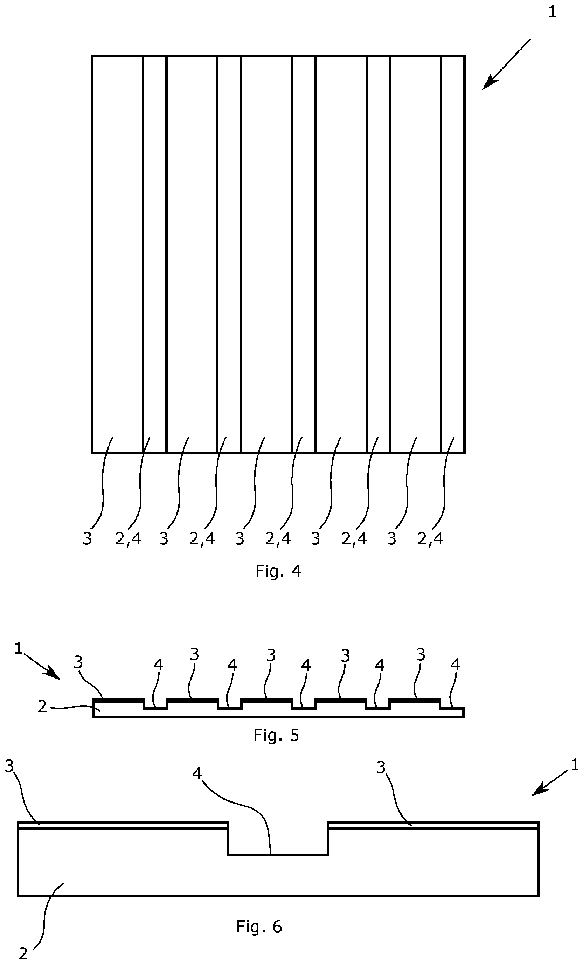

Figur 4 zeigt eine schematische Ansicht eines Wand- bzw. Deckenpaneels 1 gemäß einer beispielhaften Ausführungsform der vorliegenden Erfindung in Draufsicht. Zu erkennen ist eine Strukturierung des Wand- bzw. Deckenpaneels 1 mit parallelen Nuten 4. Die parallelen Nuten 4 sind in den schnittbildlichen Ansichten des Wand- bzw. Deckenpaneels 1 in den Figuren 5 und 6 gut zu erkennen.

Der Kunststoff der Rückwand 2 der in den Figuren 4, 5 und 6 gezeigten Wand-bzw. Deckenpaneele 1 ist auf mikroskopischer Ebene derart in Form gebracht, dass er Schall absorbiert. Diese mikroskopische Form ist in den Zeichnungen nicht dargestellt, kann aber beispielsweise durch eine filzartige, vliesartige oder moosartige mikroskopische Form des Kunststoffes erreicht werden. Das in den Figuren 4, 5 und 6 gezeigte Wand- bzw. Deckenpaneel 1 kann also als Akustikpaneel verwendet werden.

Die makroskopische Form der einteiligen Rückwand 2 der in den Figuren 4, 5 und 6 gezeigten Wand- bzw. Deckenpaneele 1 ist dergestalt, dass in regelmäßigen Abständen parallele Nuten 4 in die Rückwand 2 eingebracht sind. Die Nuten 4 sind in den gezeigten Ausführungsbeispielen 13mm breit. Die Rückwand 2 ist im Bereich der Nuten 4 in den gezeigten Ausführungsformen 5,5mm dick. Die Abstände zwischen den Nuten 4 betragen bei den gezeigten Wand- bzw. Deckenpaneelen 1 jeweils 27mm. Zwischen den Nuten 4 ist die Rückwand 2 hier 9mm dick. Die hier dargestellten Nuten 4 haben einen rechteckigen Querschnitt. Denkbar ist aber auch, dass die Nuten 4 einen halbkreisförmigen, einen halbovalförmigen oder einen V-förmigen Querschnitt haben.

In den Bereichen zwischen den Nuten 4 ist die Dekorschicht 3 direkt auf die Rückwand 2 aufgebracht, beispielsweise geklebt oder aufgeschmolzen. Zwischen der Dekorschicht 3 und der Rückwand 2 ist keine Faserholzplatte, wie beispielsweise eine MDF-Platte, angebracht. Die Dekorschicht 3 ist direkt auf der Rückwand 2, welche aus recyceltem PET hergestellt ist, angeordnet.

### Bezugszeichenliste:

- 1: Wand- bzw. Deckenpaneel
- 2: Rückwand
- 3: Dekorschicht
- 3.1: Optik-Schicht
- 3.2: Funktionsschicht
- 4: Nut

## Patentansprüche

1. Wand- oder Deckenpaneel (1) aufweisend eine Rückwand (2) aus Kunststoff und eine Dekorschicht (3), **dadurch gekennzeichnet, dass** die Dekorschicht (3) direkt auf der Rückwand (2) angeordnet ist.

2. Wand- oder Deckenpaneel (1) nach Anspruch 1, **dadurch gekennzeichnet, dass** die Rückwand (2) Kunststofffasern aufweist und vorzugsweise aus Kunststofffasern besteht.

3. Wand- oder Deckenpaneel (1) nach einem der vorhergehenden Ansprüche, **dadurch gekennzeichnet, dass** der Kunststoff ein recycelter Kunststoff ist.

4. Wand- oder Deckenpaneel (1) nach einem der vorhergehenden Ansprüche, **dadurch gekennzeichnet, dass** der Kunststoff PET ist.

5. Wand- oder Deckenpaneel (1) nach einem der vorhergehenden Ansprüche, **dadurch gekennzeichnet, dass** die Dekorschicht (3) mit der Rückwand (2) teilflächig oder ganzflächig verklebt ist.

6. Wand- oder Deckenpaneel (1) nach einem der vorhergehenden Ansprüche, **dadurch gekennzeichnet, dass** die Dekorschicht (3) Holz aufweist und vorzugsweise ein Furnier ist oder dass die Dekorschicht (3) Stein aufweist und vorzugsweise ein Steinfurnier ist.

7. Wand- oder Deckenpaneel (1) nach einem der vorhergehenden Ansprüche, **dadurch gekennzeichnet, dass** die Dekorschicht (3) ein Metall umfasst und vorzugsweise eine Metallschicht ist.

8. Wand- oder Deckenpaneel (1) nach einem der vorhergehenden Ansprüche, **dadurch gekennzeichnet, dass** die Dekorschicht (3) eine moosartige Struktur umfasst, wobei die moosartige Struktur vorzugsweise ein Moos und/oder ein Kunstmoos ist.

9. Wand- oder Deckenpaneel (1) nach einem der vorhergehenden Ansprüche, **dadurch gekennzeichnet, dass** die Dekorschicht (3) ein Laminat, vorzugsweise in Holz- oder Steinoptik, und/oder eine Schieferschicht und/oder eine Schicht zur Verwendung als Tafel und/oder eine Lederschicht, vorzugsweise eine Kunst- oder Echtlederschicht, und/oder eine Glasschicht und/oder eine Spiegelschicht umfasst.

10. Wand- oder Deckenpaneel (1) nach einem der vorhergehenden Ansprüche, **dadurch gekennzeichnet, dass** die Rückwand (2) zumindest teilweise zwischen 4m und 15mm und vorzugsweise 9mm dick ist und die Dekorschicht (3) wenigstens 0,5 mm dick, bevorzugt dicker, besonders bevorzugt zwischen 0,5 mm und 100 mm dick ist.
